# EUROPEAN PATENT SPECIFICATION

(11) **EP 2 848 017 B1**
(45) Date of publication and mention of the grant of the patent: **27.06.2018**
(21) Application number: 13788400.3
(22) Date of filing: 07.05.2013
(51) Int. Cl.: H04W 8/08, H04W 76/10

(54) **DETERMINING PROXIMITY OF USER EQUIPMENT FOR DEVICE-TO-DEVICE COMMUNICATION**
BESTIMMUNG DER NÄHE VON BENUTZERGERÄT FÜR EINE VORRICHTUNG-ZU-VORRICHTUNG-KOMMUNIKATIONEN
DÉTERMINATION DE LA PROXIMITÉ D'UN ÉQUIPEMENT D'UTILISATEUR POUR UNE COMMUNICATION DE DISPOSITIF À DISPOSITIF

(30) Priority: 11.05.2012 US 201261646223 P; 19.11.2012 US 201213681361
(43) Date of publication of application: 18.03.2015
(73) Proprietor: Intel Corporation, Santa Clara, CA 95054 (US)
(72) Inventor: FONG, Mo-Han, Sunnyvale, California 94087 (US); VENKATACHALAM, Muthaiah, Beaverton, Oregon 97006 (US)
(74) Representative: Goddar, Heinz J.
(86) International application number: PCT/US2013/040008
(87) International publication number: WO 2013/169823

(56) References cited:
- US-A1- 2004 068 364
- US-A1- 2006 026 678
- US-A1- 2006 256 008
- US-A1- 2008 318 592
- US-B2- 7 277 889
- HAMID MENOUAR ET AL: "Improving Proactive Routing in VANETs with the MOPR Movement Prediction Framework", TELECOMMUNICATIONS, 2007. ITST '07. 7TH INTERNATIONAL CONFERENCE ON ITS, IEEE, PISCATAWAY, NJ, USA, 1 June 2007 (2007-06-01), pages 1-6, XP031130379, ISBN: 978-1-4244-1177-1
- CARLES FERNANDEZ-PRADES ET AL: "Satellite Radiolocalization From GPS to GNSS and Beyond: Novel Technologies and Applications for Civil Mass Market", PROCEEDINGS OF THE IEEE, IEEE. NEW YORK, US, vol. 99, no. 11, 1 November 2011 (2011-11-01), pages 1882-1904, XP011363246, ISSN: 0018-9219, DOI: 10.1109/JPROC.2011.2158032
- Md. Imrul Hassan, Hai L. Vu, Taka Sakurai: "Medium Access Protocols for Cooperative collision Avoidance in Vehicular Ad-Hoc Networks" In: Advances in Vehicular Ad-Hoc Networks: Developments and ChallengesMohamed Watfa: 1 April 2010 (2010-04-01), Information Science Reference, USA ISBN: 1615209131 pages 97-98,

## Description

### Field

Embodiments of the present invention relate generally to the technical field of data processing, and more particularly, to determining proximity of user equipment ("UE") for device-to-device ("D2D") communication.

### Background

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by inclusion in this section.

Wireless mobile devices (e.g., user equipment, or "UE") may communicate with each other over a wireless wide area network ("WWAN"), e.g., using radio access technologies ("RAT") such as the 3 GPP Long Term Evolution ("LTE") Advanced Release 10 (March 2011) (the "LTE-A Standard"), the IEEE 802.16 standard, IEEE Std. 802.16- 2009, published May 29, 2009 ("WiMAX"), as well as any other wireless protocols that are designated as 3G, 4G, 5G, and beyond.

Some UEs also may be configured to communicate directly with other UEs, e.g., using device-to-device ("D2D") communication. D2D communication may be used, e.g., when UEs initiate communication with each other while within direct wireless range of each other. RATs that may be used in this manner may include 802.11 ("WiFi"), BlueTooth, near field communication ("NFC"), FlashLinq by Qualcomm®, and so forth.

UEs may initiate communication with each other over a WWAN, but may be in, or move into, sufficient proximity to exchange data directly, e.g., using WiFi Direct, BlueTooth, Flashlinq, NFC, etc. Continuing to using WWAN resources to communicate in such a situation may drain WWAN resources that may be put to better use for communications between UEs that are remote from each other.

Document H. Menouar, et al., "Improving proactive routing in VANETs with the MOPR Movement prediction Framework" discloses a method for creating a vehicular mobile Ad hoc network. Simulations are provided how several matrices included in an end-to-end network between different vehicles effect effect data transmission.

A computing device according to claim 1 and a computer implemented method according to claim 10 are disclosed.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Fig. 1 schematically illustrates various network entities configured with applicable portions of the present disclosure to facilitate commencement of device-to-device ("D2D") communication between user equipment ("UE"), in accordance with various embodiments of the present disclosure.
Fig. 2 schematically depicts an example of communications that may be exchanged between various network entities configured with applicable portions of the teachings of the present disclosure, in accordance with various embodiments of the present disclosure.
Fig. 3 schematically depicts an example method that may be implemented by a traffic detection function ("TDF"), in accordance with various embodiments of the present disclosure.
Fig. 4 schematically depicts an example method that may be implemented by an evolved serving mobile location center ("E-SMLC"), in accordance with various embodiments.
Fig. 5 schematically depicts an example of communications, similar to those shown in Fig. 2, that may be exchanged between various network entities configured with applicable portions of the teachings of the present disclosure, in accordance with various embodiments of the present disclosure.
Fig. 6 schematically depicts an example method that may be implemented by an evolved Node B ("eNB"), in accordance with various embodiments.
Fig. 7 schematically depicts an example method that may be implemented by a UE, in accordance with various embodiments.
Fig. 8 schematically depicts an example computing device on which disclosed methods and computer-readable media may be implemented, in accordance with various embodiments.

### Detailed Description

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrases "A or B" and "A and/or B" mean (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the terms "module" and/or "logic" may refer to, be part of, or include an Application Specific Integrated Circuit ("ASIC"), an electronic circuit, a processor (shared, dedicated, or group) and/or memory (shared, dedicated, or group) that execute one or more software or firmware programs, a combinational logic circuit, and/or other suitable components that provide the described functionality.

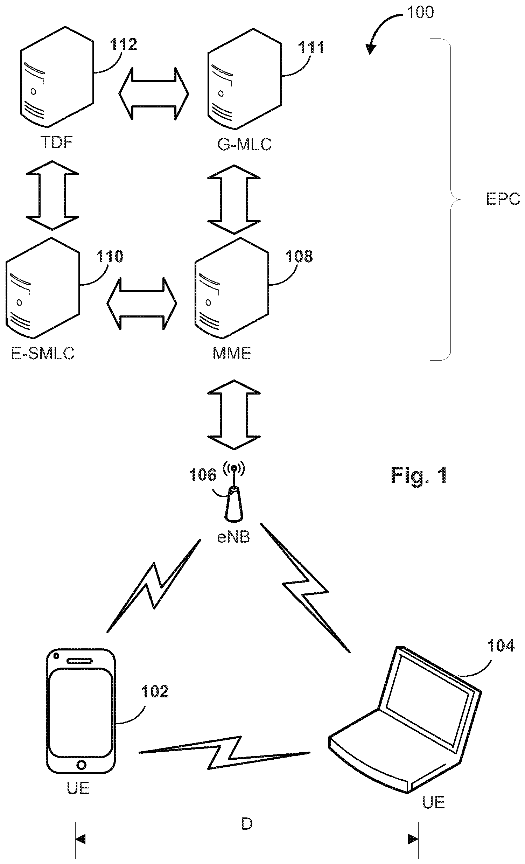

An example wireless wide area network ("WWAN") 100 is depicted in Fig. 1. A first mobile device in the form of a first user equipment ("UE") 102 (configured with applicable portions of the teachings of the present disclosure) and a second mobile device in the form of a second UE 104 (configured with applicable portions of the teachings of the present disclosure) may be in wireless communication with each other via WWAN 100. In particular, first UE 102 and second UE 104 may be in direct communication with a radio access network ("RAN") via an access point in the form of an evolved Node B ("eNB") 106.

Although first UE 102 is depicted as a touch screen smart phone, and second UE 104 is depicted as a laptop computer, this is not meant to be limiting. As discussed below, mobile devices (e.g., UEs) described herein may be any type of data processing device, including but not limited to a tablet computer, a personal digital assistant ("PDA"), a portable gaming device, and so forth.

eNB 106 may be in network communication with various components of an Evolved Packet Core ("EPC"). For example, eNB 106 may be in network communication with a mobility management entity ("MME") 108. MME 108 may be configured to perform various functions, including but not limited to non-access stratum ("NAS") signaling and NAS signaling security, idle mode UE reachability, public data network ("PDN") and serving gateway selection, MME selection for handoffs, authentication, bearer management functions, and so forth.

MME 108 may itself be in network communication with various other nodes. For instance, MME 108 may be in network communication with an evolved serving mobile location center ("E-SMLC") 110. E-SMLC 110 may be configured to perform various functions related to location services ("LCS"). For example, E-SMLC 110 may manage the support of different location services for target UEs, e.g., including positioning of UEs and delivery of assistance data to UEs. In various embodiments, E-SMLC 110 may interact with the serving eNB (e.g., 106) for a target UE (e.g., 102, 104) in order to obtain position measurements for the target UE. These position measurements may include but are not limited to uplink measurements made by the serving eNB and downlink measurements made by the target UE. The downlink measurements may have been provided to the serving eNB as part of other functions, such as support of handover. E-SMLC 110 may interact with a target UE (e.g., 102, 104) in order to deliver assistance data if requested for a particular location service, or to obtain a location estimate if that was requested. In various embodiments, in addition to or instead of E-SMLC 110, a gateway mobile location center ("G-MLC") 111 may perform similar functions as E-SMLC 110.

For positioning of a target UE (e.g., 102, 104), E-SMLC 110 (or G-MLC 111) may determine the positioning method to be used, based on factors such as LCS client type, a required quality of service ("QoS"), UE positioning capabilities, and/or eNB positioning capabilities. E-SMLC 110 may invoke these positioning methods in the target UE and/or serving eNB. UE-based positioning methods may yield a location estimate. UE-assisted and network-based positioning methods may yield positioning measurements. E-SMLC 110 may combine received results and, based on those results, determine a single location estimate for the target UE, as well as other information such as an accuracy of the estimate.

E-SMLC 110 (or G-MLC 111) may be in network communication with various other network entities. For instance, E-SMLC 110 may be in network communication with a traffic detection function ("TDF") 112. While TDF 112 is depicted in Fig. 1 as operating on a separate server computer, this is not meant to be limiting. TDF 112 may be implemented using any combination of hardware and software on any network computing device, such as those shown in Fig. 1 and others that are not shown but are often found in wireless communication networks. Moreover, in various embodiments, one or more of the entities depicted in Fig. 1 may be implemented on the same or different computing devices.

In various embodiments, if first UE 102 and second UE 104 are sufficiently proximate, and assuming both first UE 102 and second UE 104 are equipped with the same direct radio access technology ("RAT"), e.g., WiFi Direct, Bluetooth, near field communication ("NFC"), Flashlinq, etc. then first UE device 102 and second UE device 104 may be able to exchange data directly. For example, in Fig. 1, assume first UE 102 and second UE 104 are in communication already via WWAN 100 and are separated by a distance D. If D is less than a particular threshold, such as a maximum range of a particular RAT, then first UE 102 and second UE 104 may be able to communicate directly, e.g., using device-to-device ("D2D") communication, rather than through WWAN 100.

However, while first UE 102 and second UE 104 may momentarily be within sufficient proximity to commence D2D communication, they might not necessarily remain in sufficient proximity for long enough to justify a transition to D2D communication. For instance, a user of first UE 102 may be moving in one direction, and a user of second UE 104 may be moving in a different direction. The WWAN resources gained by commencing D2D communication between first UE 102 and second UE 104 may not be worth the network resources expended to implement the transition if the D2D communication will be short-lived.

Accordingly, in various embodiments, various network entities may be configured to determine not only whether first UE 102 and second UE 104 are sufficiently proximate to exchange data directly, but also whether they will remain proximate for an amount of time that justifies commencing D2D communication between the UEs.

In various embodiments, TDF 112 may be configured to ascertain that first UE 102 and second UE 104 are, potentially, sufficiently proximate to each other to wirelessly exchange data directly. Various events may cause TDF 112 to make this ascertainment. As one non-limiting example, eNB 106 may determine that it is serving both first UE 102 and second UE 104. In such case, eNB 106 may be configured to transmit a request (e.g., an LCS request) to TDF 112 to determine whether first UE 102 and second UE 104 are sufficiently proximate to exchange data directly, e.g., using D2D communication. As another non-limiting example, first UE 102 or second UE 104 may itself determine that there is a possibility that the other is, potentially, sufficiently proximate to commence D2D communication. In such case, the UE device may transmit a request (e.g., an LCS request) to TDF 112 to determine whether first UE 102 and second UE 104 are sufficiently proximate to exchange data directly.

Upon ascertaining that first UE 102 and second UE 104 are, potentially, sufficiently proximate to exchange data directly, TDF 112 may instruct E-SMLC 110 (or G-MLC 111) to obtain location change data associated with the first UE 102 and/or second UE 104. As used herein, the term "location change data" may include any data that demonstrates a change of location of a UE. For instance, location change data may include a velocity of a UE. Being a vector, a UE velocity may include a both speed component and a direction component. For instance, if the distance D between first UE 102 and second UE is growing at a particular rate over time, that may indicate that first UE 102 and second UE 104 are moving away from each other. Location change data may include any other indications of movement of UEs, such as acceleration.

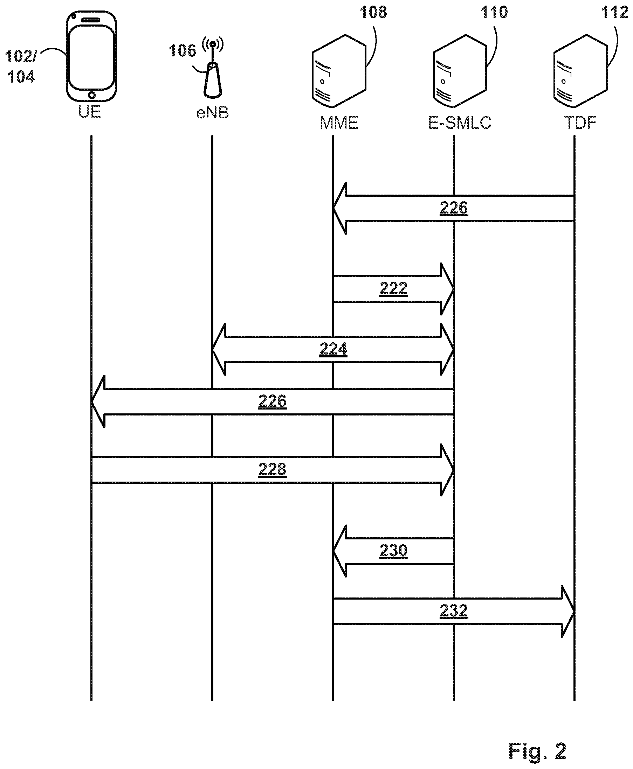

In some embodiments, TDF 112 may instruct E-SMLC 110 (or G-MLC 111) to obtain location change data associated with one or more UEs via a direct signaling interface. In other embodiments, such as the example shown in Fig. 2, this may be done through other nodes. Referring now to Fig. 2, at arrow 220, TDF 112 may send a request for location change information associated with the first UE 102 and/or second UE 104 to MME 108. At arrow 222, MME 108 may forward this request to E-SMLC 112 (or G-MLC 111). In other embodiments, TDF 112 may transmit this instruction via other nodes. For example, TDF 112 may transmit the instruction to E-SMLC 110 (or G-MLC 111) through MME 108, e.g., using a logical tunnel.

At arrow 224, E-SMLC 110 (or G-MLC 111) may instigate location procedures with serving eNB 106. For example, E-SMLC 110 (or G-MLC 111) may request that eNB 108 provide location change data associated with first UE 102 and/or second UE 104. In various embodiments, E-SMLC 110 (or G-MLC 111) may also obtain assistance data from eNB 106, for provision to a target UE such as 102 or 104.

Additionally or alternatively to arrow 224, at arrow 226, E-SMLC 110 (or G-MLC 111) may instigate location procedures with UE 102 or 104. In various embodiments, E-SMLC 110 (or G-MLC 111) may obtain a location estimate (e.g., a GPS coordinate) or location change data from UE 102 or 104. In various embodiments, E-SMLC 110 (or G-MLC 111) may transfer, to UE 102 or 104, the assistance data obtained from eNB 106 at block 224. This assistance data may be used to assist with UE-based and/or UE-assisted positioning methods. At arrow 228, UE 102 or 104 may transmit location change data associated with first UE 102 or second UE 104 to E-SMLC 110 (or G-MLC 111), e.g., through eNB 106 and/or MME 108.

Upon receiving location change data associated with first UE 102 and/or second UE 104, E-SMLC 110 (or G-MLC 111) may provide the location change data to TDF. In some embodiments, e.g., where TDF 112 and E-SMLC 110 (or G-MLC 111) establish a direct signaling interface, this communication may be sent directly. In other embodiments, such as the one depicted in Fig. 2, at arrow 230, E-SMLC 110 (or G-MLC 111) may forward the location change data to MME 108. MME 108 may in turn forward the location change data to TDF 112 at arrow 232.

Once it receives the location change data, TDF 112 may determine, based on the location change data, whether first UE 102 and second UE 104 are sufficiently proximate to exchange data directly, and whether they are likely to remain proximate for at least a predetermined time interval. In various embodiments, the predetermined time interval may be selected to be long enough so that the benefits of commencing D2D communication (e.g., reduced WWAN network traffic) outweigh the costs of the transition. This predetermined time interval may be set, e.g., by a network administrator, or may be dynamic, e.g., based on current network traffic. In various embodiments, the determination as to whether the UEs will remain proximate for a sufficient time may be made based on various laws of physics and motion. For instance, relative velocities and/or accelerations of two UEs reveal, e.g., as input in standard physics/motion equations, that the UEs will be within direct wireless range for a sufficient amount of time to justify commencement of D2D communication.

If TDF 112 determines that first UE 102 and second UE 104 will be in proximity for at least the predetermined time interval, TDF 112 may cause first UE 102 and second UE 104 to commence D2D communication. For example, in various embodiments, TDF 112 may instruct MME 108 to cause first UE 102 and second UE 104 to commence D2D communication. In various embodiments, MME 108 may utilize NAS signaling to instruct first UE 102 and second UE 104 to commence D2D communication.

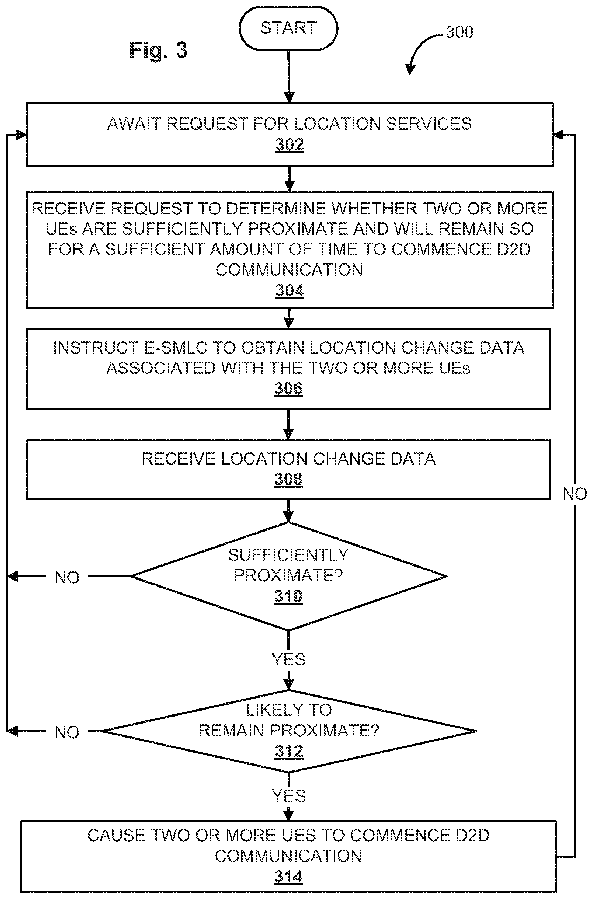

Fig. 3 depicts an example method 300 that may be implemented by a computing device as part of operating a TDF such as TDF 112. At block 302, TDF 112 may await a request to instigate and/or perform location services. At block 304, TDF 112 may receive, from various network nodes, a request to determine whether two or more UEs , e.g., first UE 102 and second UE 104, exchanging data indirectly through a WWAN are in sufficient proximity to exchange data directly, e.g., using D2D communication. The request may also seek to have TDF 112 determine whether the first and second UEs will be proximate for a sufficient amount of time, such as a predetermined time interval, to warrant commencement of D2D communication.

At 306, TDF 112 may instruct an E-SMLC or G-MLC, e.g., E-SMLC 110, to obtain location change data associated with the first and second UEs (e.g., 102 and 104). In some embodiments, TDF 112 may have a direct signaling interface with E-SMLC 110, and therefore may transmit this instruction directly, e.g., bypassing MME 108. In other embodiments, TDF 112 may transmit this instruction to MME 108, which in turn may forward the instruction to E-SMLC 110. At block 308, TDF 112 may receive location change data, e.g., from E-SMLC 110 by way of MME 108.

At block 310, TDF 112 may determine, based on the received location change data, whether the first and second UEs are sufficiently proximate to exchange data directly. If the answer is yes, then at block 312, TDF 112 may determine whether the first and second UEs are likely to remain proximate for at least a predetermined time interval (e.g., based on standard laws of physics/motion). If the answer is yes, then at block 314, TDF 112 may cause first UE 102 and second UE 104 to commence D2D communication. If the answer at either block 310 or block 312 is no, then method 300 may proceed back to block 302.

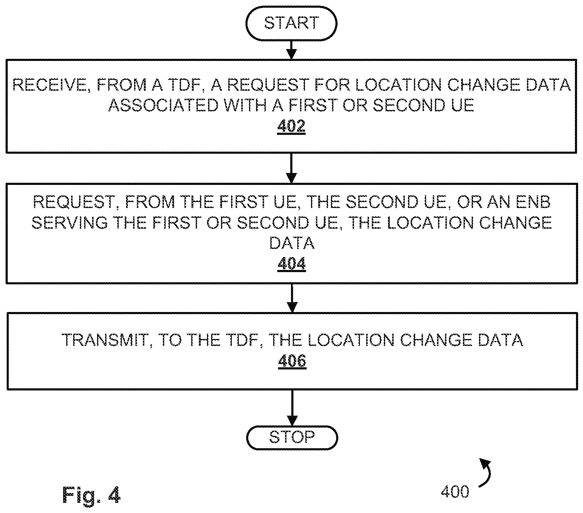

Fig. 4 depicts an example method 400 that may be implemented by, e.g., E-SMLC 110 or G-MLC 111, in accordance with various embodiments. At block 402, E-SMLC 110/G-MLC 111 may receive, e.g., from TDF 112, a request for location change data associated with first UE 102 or second UE 104. At block 404, E-SMLC 110/G-MLC 111 may request, e.g., from first UE 102, second UE 104, or eNB106 serving first UE 102 or second UE 104, the location change data. At block 406, E-SMLC 110/G-MLC 111 may transmit the location change data, e.g., to TDF 112.

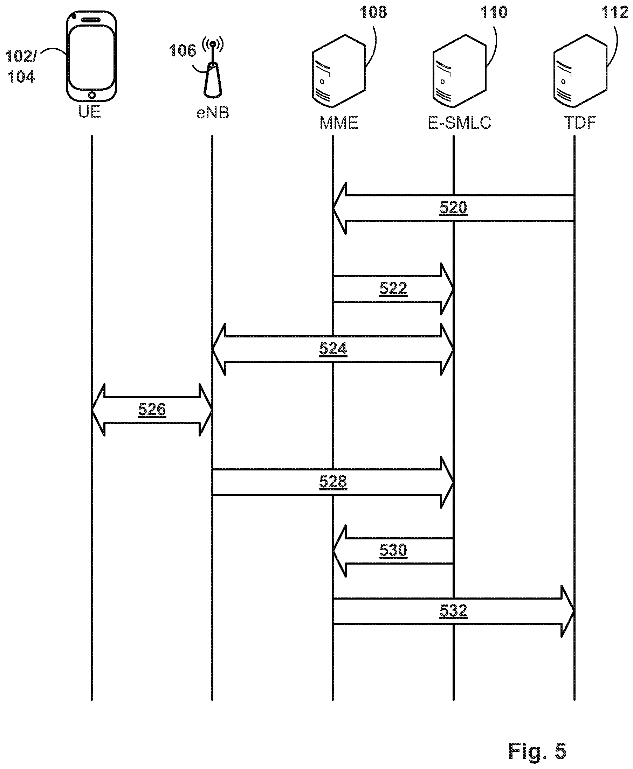

Fig. 5 depicts a slight variation of the data exchange shown in Fig. 2. In this example, arrows 520, 522 524, 530 and 532 represent data exchanges similar to those represented by arrows 220, 222, 224, 230 and 232 in Fig. 2, respectively. However, Fig. 5 differs from Fig. 2 at arrows 526 and 528. Rather than E-SMLC 110 (or G-MLC 111) instigating location procedures with UE 102 or 104, at arrow 626, eNB 106 may instigate (e.g., at the request of E-SMLC 110) location procedures with UE 102 or 104. For example, eNB 106 may encapsulate a request for location services in an radio resource control ("RRC") and/or NAS signal to UE 102 or UE 104. UE 102 or 104 may encapsulate a response in an RRC and/or NAS signal back to eNB 106. eNB 106 may then forward the UE location data to E-SMLC 110 at arrow 528.

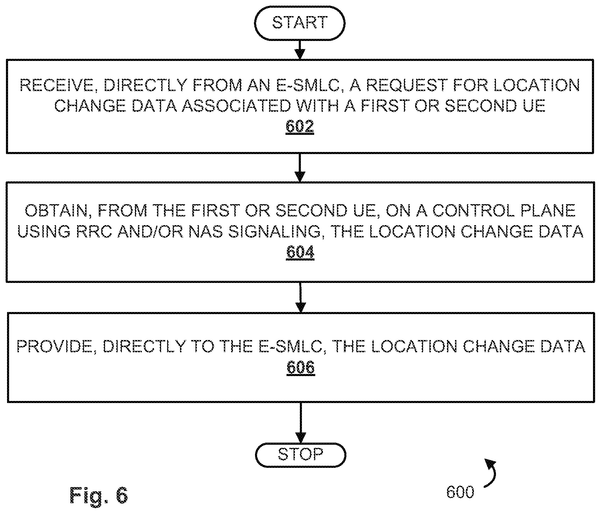

Fig. 6 depicts an example method 600 that may be implemented by, e.g., eNB 106, to exchange communications as shown in Fig. 5. At block 602, eNB 106 may receive, e.g., from E-SMLC 110 (or G-MLC 111), a request for location change data associated with first UE 102 or a second UE 104. At block 604, eNB 106 may obtain, e.g., from first UE 102 or second UE 104, e.g., on a control plane over an air interface using RRC and/or NAS signaling, the location change data. For example, eNB 106 may encapsulate a location message (e.g., a request) into an RRC and/or NAS message and send it first UE 102 using RRC. First UE 102 may decapsulate the RRC and/or NAS message and consume the contents (e.g., the request). First UE 102 may likewise encapsulate location change data into a return RRC and/or NAS message, and send it back to eNB 106 using RRC and/or NAS signaling. At block 606, eNB 106 may decapsulate the message and provide the contents, e.g., the location change data, to E-SMLC 110 (or G-MLC 111).

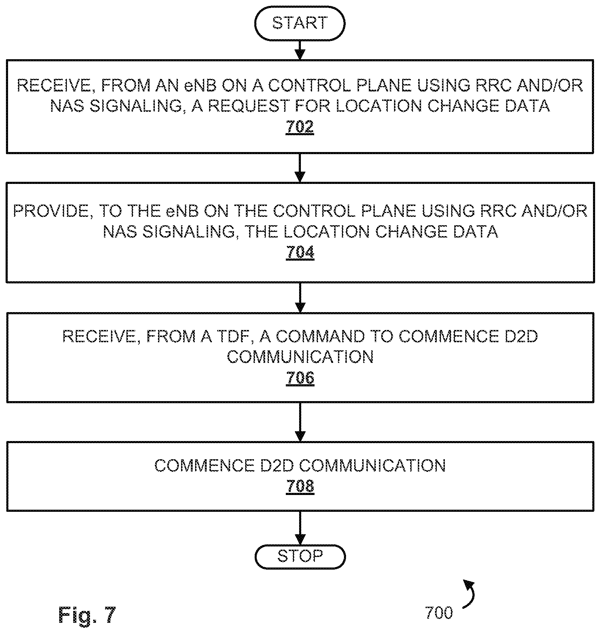

Fig. 7 depicts an example method 700 that may be implemented by, e.g., first UE 102 or second UE 104. At block 702, a UE (e.g., first UE 102) may receive, from an eNB (e.g., eNB 106) serving the UE, on a control plane using at least one of RRC and NAS signaling, a request for location change data. At block 704, the UE may provide, to the eNB on a control plane using at least one of RRC and NAS signaling, the location change data. At block 706, the UE may receive, e.g., from a TDF (e.g., TDF 112), a command to commence D2D communication with another UE (e.g., second UE 104) served by the eNB, e.g., upon the TDF determining that the UE and the another UE are sufficiently proximate to exchange data directly and are likely to remain proximate for at least a predetermined time interval. At block 708, the UE may commence D2D with the another UE served by the eNB

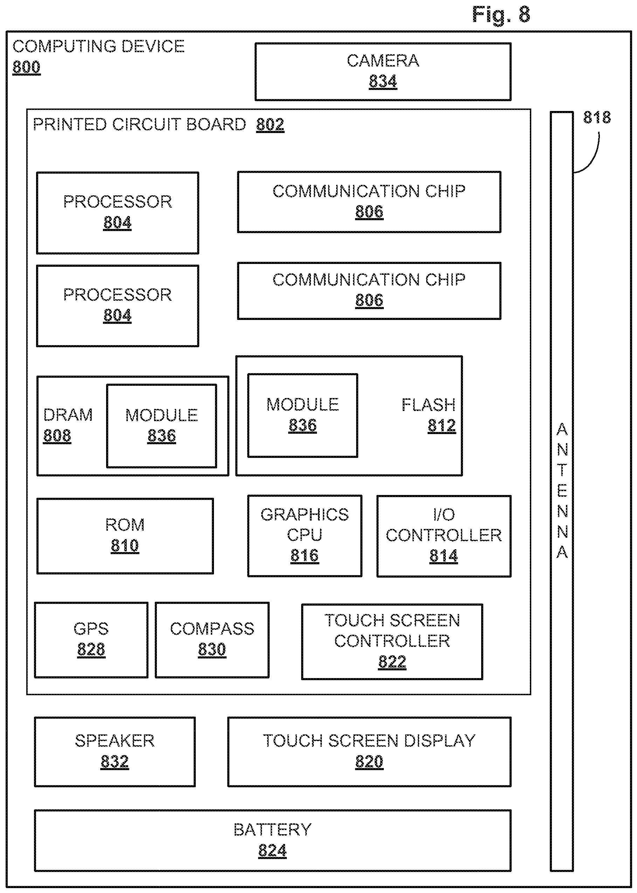

Fig. 8 illustrates an example computing device 800, in accordance with various embodiments. UE (e.g., 102, 104) or another network entity (e.g., 108, 110, 112) as described herein may be implemented on a computing device such as computing device 800. Computing device 800 may include a number of components, one or more processor(s) 804 and at least one communication chip 806. In various embodiments, the one or more processor(s) 804 each may be a processor core. In various embodiments, the at least one communication chip 806 may also be physically and electrically coupled to the one or more processors 804. In further implementations, the communication chip 806 may be part of the one or more processors 804. In various embodiments, computing device 800 may include printed circuit board ("PCB") 802. For these embodiments, the one or more processors 804 and communication chip 806 may be disposed thereon. In alternate embodiments, the various components may be coupled without the employment of PCB 802.

Depending on its applications, computing device 800 may include other components that may or may not be physically and electrically coupled to the PCB 802. These other components include, but are not limited to, volatile memory (e.g., dynamic random access memory 808, also referred to as "DRAM"), non-volatile memory (e.g., read only memory 810, also referred to as "ROM"), flash memory 812, an input/output controller 814, a digital signal processor (not shown), a crypto processor (not shown), a graphics processor 816, one or more antenna 818, a display (not shown), a touch screen display 820, a touch screen controller 822, a battery 824, an audio codec (not shown), a video codec (not shown), a global positioning system ("GPS") device 828, a compass 830, an accelerometer (not shown), a gyroscope (not shown), a speaker 832, a camera 834, and a mass storage device (such as hard disk drive, a solid state drive, compact disk ("CD"), digital versatile disk ("DVD"))(not shown), and so forth. In various embodiments, the processor 804 may be integrated on the same die with other components to form a System on Chip ("SoC").

In various embodiments, volatile memory (e.g., DRAM 808), non-volatile memory (e.g., ROM 810), flash memory 812, and the mass storage device may include programming instructions configured to enable computing device 800, in response to execution by one or more processors 804, to practice all or selected aspects of methods 300, 400, 600 or 700, depending on whether computing device 800 is used to implement first UE 102, second UE 104, TDF 112, eNB 106, E-SMLC 110, or G-MLC 111. More specifically, one or more of the memory components such as volatile memory (e.g., DRAM 808), non-volatile memory (e.g., ROM 810), flash memory 812, and the mass storage device may include temporal and/or persistent copies of instructions that, when executed, by one or more processors 804, enable computing device 800 to operate one or more modules 836 configured to practice all or selected aspects of methods 300, 400, 600 or 700, depending on whether computing device 800 is used to implement first UE 102, second UE 104, TDF 112, eNB 106, E-SMLC 110, or G-MLC 111.

The communication chips 806 may enable wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 806 may implement any of a number of wireless standards or protocols, including but not limited to IEEE 802.20, General Packet Radio Service ("GPRS"), Evolution Data Optimized ("Ev-DO"), Evolved High Speed Packet Access ("HSPA+"), Evolved High Speed Downlink Packet Access ("HSDPA+"), Evolved High Speed Uplink Packet Access ("HSUPA+"), Global System for Mobile Communications ("GSM"), Enhanced Data rates for GSM Evolution ("EDGE"), Code Division Multiple Access ("CDMA"), Time Division Multiple Access ("TDMA"), Digital Enhanced Cordless Telecommunications ("DECT"), Bluetooth, derivatives thereof, as well as any other wireless protocols that are designated as 3G, 4G, 5G, and beyond. The computing device 800 may include a plurality of communication chips 806. For instance, a first communication chip 806 may be dedicated to shorter range wireless communications such as Wi-Fi and Bluetooth and a second communication chip 806 may be dedicated to longer range wireless communications such as GPS, EDGE, GPRS, CDMA, WiMAX, LTE, Ev-DO, and others.

In various implementations, the computing device 800 may be a laptop, a netbook, a notebook, an ultrabook, a smart phone, a computing tablet, a personal digital assistant ("PDA"), an ultra mobile PC, a mobile phone, a desktop computer, a server, a printer, a scanner, a monitor, a set-top box, an entertainment control unit (e.g., a gaming console), a digital camera, a portable music player, or a digital video recorder. In further implementations, the computing device 800 may be any other electronic device that processes data.

Embodiments of apparatus, packages, computer-implemented methods, systems, devices, and computer-readable media (transitory and non-transitory) are described herein for a TDF configured to ascertain that a first UE and a second UE are, potentially, sufficiently proximate to each other to wirelessly exchange data directly. In various embodiments, the TDF may instruct an E-SMLC to obtain location change data associated with the first and second UEs. In various embodiments, the TDF may determine, based on the location change data, whether the first and second UEs are sufficiently proximate to exchange data directly, and whether the first and second UEs are likely to remain proximate for at least a predetermined time interval. In various embodiments, the TDF may cause the first and second UEs to commence D2D communication based on the determination.

In various embodiments, the location change data may include information about a velocity and/or acceleration of the first or second UE. In various embodiments, the location change data may include comprises information about a rate of change of relative locations of the first and second UEs.

In various embodiments, the TDF may instruct the E-SMLC to obtain the location change data via at least one of RRC or NAS signaling over a control plane of a RAN. In various embodiments, the TDF may instruct an MME to cause the first and second UEs to commence D2D communication. In various embodiments, the TDF may instruct the MME to use NAS signaling to instruct the first and second UEs to commence D2D communication. In various embodiments, the TDF may instruct the E-SMLC using a direct signaling interface.

In various embodiments, the TDF may ascertain that the first and second UEs are, potentially, sufficiently proximate to each other to wirelessly exchange data directly based on a request from the first or second UE. In various embodiments, the TDF may ascertain that the first and second UEs are, potentially, sufficiently proximate to each other to wirelessly exchange data directly based on a request for location services from an eNB in communication with and/or serving the first or second UE.

In various embodiments, an eNB may be configured to obtain, from an E-SMLC, a request for location change data associated with a first UE or a second UE. In various embodiments, the eNB may obtain, from the first or second UE using RRC and/or NAS signaling, the location change data. In various embodiments, the eNB may provide the location change data to the E-SMLC. In various embodiments, receipt of the request for location change data and provision of the location change data are direct to the E-SMLC, bypassing a MME.

In various embodiments, a system may include one or more processors, memory operably coupled to the one or more processors, and instructions in the memory that, when executed by the one or more processors, cause the one or more processors to operate an E-SMLC. In various embodiments, the E-SMLC may be configured to receive, from a TDF, a request for location change data associated with a first UE or a second UE. In various embodiments, the E-SMLC may be configured to request, from the first UE, the second UE, or an eNB serving the first or second UE, the location change data. In various embodiments, the E-SMLC may be configured to transmit the location change data to the TDF. In various embodiments, the location change data may include information about a velocity of the first or second UE. In various embodiments, the E-SMLC may be further configured to cause the eNB to obtain the location change data from the first or second UE using radio resource control signaling. In various embodiments, the E-SMLC may be configured to receive the request from the TDF via an MME. In various embodiments, the E-SMLC may be configured to receive the request directly from the TDF, bypassing an MME. In various embodiments, the E-SMLC may include a Bluetooth transceiver.

In various embodiments, a UE may include processing circuitry to receive, from an eNB serving the UE, using at least one of RRC and NAS signaling, a request for location change data. In various embodiments, the processing circuitry may be configured to provide, to the eNB using at least one of RRC and NAS signaling, the location change data. In various embodiments, the processing circuitry may be configured to commence D2D communication with another UE served by the eNB responsive to a determination that the UE and the another UE are sufficiently proximate to exchange data directly and are likely to remain proximate for at least a predetermined time interval. In various embodiments, the processing circuitry may be configured to commence the D2D communication with the another UE responsive to a command from a TDF.

Although certain embodiments have been illustrated and described herein for purposes of description, this application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second or third) for identified elements are used to distinguish between the elements, and do not indicate or imply a required or limited number of such elements, nor do they indicate a particular position or order of such elements unless otherwise specifically stated.

## Claims

1. A computing device comprising processing circuitry to operate a traffic detection function ("TDF") to:
ascertain that a first device and a second device are, potentially, sufficiently proximate to each other to wirelessly exchange data directly;
obtain location change data associated with the first device and the second device;
determine, based on the location change data, whether the first device and the second device are sufficiently proximate to exchange data directly, and whether the first device and the second device are likely to remain proximate for at least a predetermined time interval; and
**characterized in** causing the first device and the second device to commence device-to-device ("D2D") communication based on the determination, wherein the first device is a first mobile user equipment ("UE") and the second device is a second mobile UE,
first and second mobile UE are configured to communicate with each other using LTE, and
an evolved serving mobile location center ("E-SMLC") is instructed to obtain the location change data.

2. The computing device of claim 1, wherein the location change data comprises information about a velocity of the first or second UE.

3. The computing device of claim 1, wherein the location change data comprises information about acceleration of the first and second UEs.

4. The computing device of claim 1, wherein the TDF is further to instruct the E-SMLC to obtain the location change data via at least one of radio resource control ("RRC") or non-access stratum ("NAS") signaling over a control plane of a radio access network ("RAN").

5. The computing device of claim 1, wherein the TDF is further to instruct a mobility management entity ("MME") to cause the first and second UEs to commence D2D communication.

6. The computing device of claim 5, wherein the TDF is further to instruct the MME to use non-access stratum ("NAS") signaling to instruct the first and second UEs to commence D2D communication.

7. The computing device of any one of claims 1-6, wherein the TDF is further to instruct the E-SMLC using a direct signaling interface.

8. The computing device of any one of claims 1-6, wherein the TDF ascertains that the first and second UEs are, potentially, sufficiently proximate to each other to wirelessly exchange data directly based on a request from the first or second UE.

9. The computing device of any one of claims 1-6, wherein the TDF ascertains that the first and second UEs are, potentially, sufficiently proximate to each other to wirelessly exchange data directly based on a request for location services from an evolved Node B ("eNB") serving the first or second UE.

10. A computer-implemented method, comprising:
ascertaining that a first device and a second device are, potentially, sufficiently proximate to each other to wirelessly exchange data directly, wherein the first device is a first mobile user equipment ("UE") and the second device is a second mobile UE;
receiving, by an evolved Node B ("eNB") from an evolved serving mobile location center ("E-SMLC"), a request for location change data associated with the first UE or the second UE served by the eNB;
obtaining, by the eNB from the first or second UE using at least one of radio resource control ("RRC") and non-access stratum ("NAS") signaling, the location change data; and
providing the location change data to the E-SMLC;
determining, based on the location change data, whether the first UE and the second UE are sufficiently proximate to exchange data directly, and whether the first UE and the second UE are likely to remain proximate for at least a predetermined time interval; and cause the first UE and the second UE to commence device-to-device ("D2D") communication using LTE based on the determination.

11. The computer-implemented method of claim 10, wherein obtaining of the request for location change data and provision of the location change data are direct to the E-SMLC, bypassing a mobility management entity ("MME").

## Patentansprüche

1. Rechenvorrichtung, die eine Verarbeitungsschaltungsanordnung umfasst, um eine Verkehrsdetektionsfunktion ("TDF") zu betreiben zum
Feststellen, dass eine erste Einrichtung und eine zweite Einrichtung möglicherweise einander ausreichend nahe sind, um drahtlos direkt Daten auszutauschen;
Erhalten von Ortsänderungsdaten, die der ersten Einrichtung und der zweiten Einrichtung zugeordnet sind;
Bestimmen auf der Grundlage der Ortsänderungsdaten, ob die erste Einrichtung und die zweite Einrichtung ausreichend nahe sind, um direkt Daten auszutauschen, und ob es wahrscheinlich ist, dass die erste Einrichtung und die zweite Einrichtung mindestens für ein vorgegebenes Zeitintervall einander nahe bleiben;
**dadurch gekennzeichnet, dass** sie bewirkt, dass die erste Einrichtung und die zweite Einrichtung Einrichtung-zu-Einrichtungs-Kommunikation ("D2D-Kommunikation") auf der Grundlage der Bestimmung aufnehmen, wobei
die erste Einrichtung ein erstes mobiles Anwendergerät ("UE") ist und die zweite Einrichtung ein zweites mobiles UE ist,
das erste und das zweite mobile UE konfiguriert sind, miteinander unter Verwendung von LTE zu kommunizieren, und
ein weiterentwickelte, dienende Mobilortszentrale ("E-SMLC") angewiesen ist, die Ortsänderungsdaten zu erhalten.

2. Rechenvorrichtung nach Anspruch 1, wobei die Ortsänderungsdaten Informationen über eine Geschwindigkeit des ersten oder des zweiten UE umfassen.

3. Rechenvorrichtung nach Anspruch 1, wobei die Ortsänderungsdaten Informationen über eine Beschleunigung des ersten und des zweiten UE umfassen.

4. Rechenvorrichtung nach Anspruch 1, wobei die TDF ferner das E-SMLC anweist, die Ortsänderungsdaten über eine Funkbetriebsmittelsteuerung ("RRC") und/oder eine Nicht-Zugriffsschichtsignalisierung ("NAS-Signalisierung") über eine Steuerebene eines Funkzugangsnetzes ("RAN") zu erhalten.

5. Rechenvorrichtung nach Anspruch 1, wobei die TDF ferner eine Mobilitätsmanagementeinheit ("MME") anweist, zu bewirken, dass das erste und das zweite UE eine D2D-Kommunikation aufnehmen.

6. Rechenvorrichtung nach Anspruch 5, wobei die TDF ferner die MME anweist, eine Nicht-Zugriffsschichtsignalisierung ("NAS-Signalisierung") zu verwenden, um das erste und das zweite UE anzuweisen, eine D2D-Kommunikation aufzunehmen.

7. Rechenvorrichtung nach einem der Ansprüche 1-6, wobei die TDF ferner das E-SMLC unter Verwendung einer Direktsignalisierungsschnittstelle anweist.

8. Rechenvorrichtung nach einem der Ansprüche 1-6, wobei die TDF feststellt, dass das erste und das zweite UE möglicherweise einander ausreichend nahe sind, um drahtlos direkt auf der Grundlage einer Anfrage von dem ersten oder dem zweiten UE Daten auszutauschen.

9. Rechenvorrichtung nach einem der Ansprüche 1-6, wobei die TDF feststellt, dass das erste und das zweite UE möglicherweise einander ausreichend nahe sind, um drahtlos direkt auf der Grundlage einer Anfrage für Ortsdienste von einem weiterentwickelten Knoten B ("eNB"), der das erste oder das zweite UE bedient, Daten auszutauschen.

10. Computerimplementiertes Verfahren, das Folgendes umfasst:
Feststellen, dass eine erste Einrichtung und eine zweite Einrichtung möglicherweise einander ausreichend nahe sind, um drahtlos direkt Daten auszutauschen, wobei die erste Einrichtung ein erstes mobiles Anwendergerät ("UE") ist und die zweite Einrichtung ein zweites mobiles UE ist;
Empfangen durch einen weiterentwickelten Knoten B ("eNB") von einer weiterentwickelten, dienenden Mobilortszentrale ("E-SMLC") einer Anfrage für Ortsänderungsdaten, die dem ersten UE oder dem zweiten UE, die von dem eNB bedient werden, zugeordnet sind;
Erhalten durch den eNB von dem ersten oder dem zweiten UE unter Verwendung einer Funkbetriebsmittelsteuerung ("RRC") und/oder einer Nicht-Zugriffsschichtsignalisierung ("NAS-Signalisierung") der Ortsänderungsdaten;
Bereitstellen der Ortsänderungsdaten für das E-SMLC;
Bestimmen auf der Grundlage der Ortsänderungsdaten, ob die erste Einrichtung und die zweite Einrichtung ausreichend nahe sind, um direkt Daten auszutauschen, und ob es wahrscheinlich ist, dass die erste Einrichtung und die zweite Einrichtung mindestens für ein vorgegebenes Zeitintervall einander nahe bleiben; und
Bewirken, dass das erste UE und das zweite UE Einrichtung-zu-Einrichtungskommunikation ("D2D-Kommunikation") unter Verwendung von LTE auf der Grundlage der Bestimmung aufnehmen.

11. Computerimplementiertes Verfahren nach Anspruch 10, wobei das Erhalten der Anfrage für Ortsänderungsdaten und das Bereitstellen der Ortsänderungsdaten direkt unter Umgehung einer Mobilitätsmanagementeinheit ("MME") an das E-SMLC erfolgen.

## Revendications

1. Dispositif informatique comprenant des circuits de traitement servant à mettre en oeuvre une fonction de détection de trafic ("RDF") pour :
déterminer qu'un premier dispositif et un second dispositif sont, potentiellement, suffisamment proches l'un de l'autre pour échanger directement des données en mode sans fil ;
obtenir des données de changement d'emplacement associées au premier dispositif et au second dispositif ;
déterminer, en fonction des données de changement d'emplacement, que le premier dispositif et le second dispositif sont ou non suffisamment proches pour échanger directement des données, et que le premier dispositif et le second dispositif sont susceptibles ou non de rester proches pendant au moins un intervalle de temps prédéterminé ;
**caractérisé par** la mise en situation du premier dispositif et du second dispositif pour commencer une communication de dispositif à dispositif ("D2D") en fonction de la détermination,
dans lequel
le premier dispositif est un premier équipement utilisateur ("UE") mobile et le second dispositif est un second UE mobile,
les premier et second UE sont configurés pour communiquer l'un avec l'autre selon la technologie LTE, et
un centre d'emplacement mobile de desserte évolué ("E-SMLC") est instruit d'obtenir des données de changement d'emplacement.

2. Dispositif informatique selon la revendication 1, dans lequel les données de changement d'emplacement comprennent des informations sur une vitesse du premier ou du second UE.

3. Dispositif informatique selon la revendication 1, dans lequel les données de changement d'emplacement comprennent des informations sur une accélération des premier et second UE.

4. Dispositif informatique selon la revendication 1, dans lequel le TDF sert en outre à donner instruction à l'E-SMLC d'obtenir les données de changement d'emplacement par l'intermédiaire d'au moins l'une d'une signalisation de commande de ressources radio ("RRC") ou de couche non d'accès sur un plan de commande d'un réseau d'accès radio ("RAN").

5. Dispositif informatique selon la revendication 1, dans lequel le TDF sert en outre à donner instruction à une entité de gestion de mobilité ("MME") de mettre les premier et second UE en situation de commencer une communication D2D.

6. Dispositif informatique selon la revendication 1, dans lequel le TDF sert en outre à donner instruction à la MME d'utiliser une signalisation de couche non d'accès ("NAS") pour donner instruction aux premier et second UE de commencer une communication D2D.

7. Dispositif informatique selon l'une quelconque des revendications 1 à 6, dans lequel le TDF sert en outre à donner instruction à l'E-SMLC d'utiliser une interface de signalisation directe.

8. Dispositif informatique selon l'une quelconque des revendications 1 à 6, dans lequel le TDF détermine que les premier et second UE sont, potentiellement, suffisamment proches l'un de l'autre pour échanger directement des données en mode sans fil en fonction d'une demande par le premier ou le second UE.

9. Dispositif informatique selon l'une quelconque des revendications 1 à 6, dans lequel le TDF détermine que les premier et second UE sont, potentiellement, suffisamment proches l'un de l'autre pour échanger directement des données en mode sans fil en fonction d'une demande de services d'emplacement par un noeud B évolué ("eNB") qui dessert le premier ou le second UE.

10. Procédé mis en oeuvre par ordinateur, comprenant :
la détermination qu'un premier dispositif et un second dispositif sont, potentiellement, suffisamment proches l'un de l'autre pour échanger directement des données en mode sans fil, dans lequel le premier dispositif est un premier équipement utilisateur ("UE") mobile et le second dispositif est un second UE mobile ;
la réception, par un noeud B évolué ("eNB") depuis un centre d'emplacement mobile de desserte évolué ("E-SMLC"), d'une demande de données de changement d'emplacement associées au premier UE ou au second UE desservi par l'eNB ;
l'obtention, par l'eNB depuis le premier ou le second UE en utilisant au moins l'une d'une signalisation de commande de ressources radio ("RRC") ou de couche non d'accès, des données de changement d'emplacement ; et
la fourniture des données de changement d'emplacement à l'E-SMLC ;
la détermination, en fonction des données de changement d'emplacement, que le premier UE et le second UE sont ou non suffisamment proches pour échanger directement des données, et que le premier UE et le second UE sont susceptibles ou non de rester proches pendant au moins un intervalle de temps prédéterminé ; et
la mise en situation du premier UE et du second UE pour commencer une communication de dispositif à dispositif ("D2D") à l'aide de la technologie LTE en fonction de la détermination.

11. Procédé mis en oeuvre par ordinateur selon la revendication 10, dans lequel l'obtention de la demande de données de changement d'emplacement et la fourniture des données de changement d'emplacement sont effectuées directement avec l'E-SMLC, sans recours à une entité de gestion de mobilité ("MME").
